Europäisches Patentamt

(19) European Patent Office

Office européen des brevets

(11) Publication number: **0 227 730**
**B1**

(12) **EUROPEAN PATENT SPECIFICATION**

(45) Date of publication of patent specification: **31.10.90**

(21) Application number: **86903624.4**

(22) Date of filing: **17.06.86**

(86) International application number:
**PCT/NO86/00039**

(87) International publication number:
**WO 86/07624 31.12.86 Gazette 86/28**

(51) Int. Cl.⁵: **F 16 B 39/28** // F16B39/12

(54) **LOCKING NUT.**

(30) Priority: **19.06.85 NO 852464**

(43) Date of publication of application:
**08.07.87 Bulletin 87/28**

(45) Publication of the grant of the patent:
**31.10.90 Bulletin 90/44**

(84) Designated Contracting States:
**DE FR GB IT**

(56) References cited:
**DE-A-1 962 009**
**FR-A- 504 960**
**FR-A- 561 696**
**FR-A- 666 155**
**FR-A-1 053 781**
**GB-B- 162 115**
**US-A-1 137 042**
**US-A-2 575 641**
**US-A-2 621 697**
**US-A-2 742 938**

(73) Proprietor: **KOLVEREID, Harald**
**Skellefteaveien 22**
**N-8610 Grubhei (NO)**

(72) Inventor: **KOLVEREID, Harald**
**Skellefteaveien 22**
**N-8610 Grubhei (NO)**

(74) Representative: **Wagner, Karl Heinz**
**H. Wagner & Co. AB Norra Vallgatan 72**
**S-211 22 Malmö (SE)**

Courier Press, Leamington Spa, England.

## Description

The present invention relates to a locking nut consisting of a main nut and a lock nut with a hexagonal head, the main nut having an inner thread for engagement with a screw, an outer thread on an outer portion for engagement with the lock nut and a hexagonal head portion for tightening the main nut on the screw, the threaded outer portion of the main nut having at least one slot extending axially through the wall of said outer portion.

There is today on the market a number of systems, the purpose of which is to increase the friction between nut and bolt or between nut and support. Such systems are "Nyloc" nuts, castellated nuts, lock washers, etc. All these systems have in common that none markedly increases the torque which is necessary to loosen the nut from the bolt.

A locking nut as defined above is substantially already known from the US—A—2 575 641. The prior art structure according to this publication presents a solution which generates a radial force against the bolt. The radial force is determined by the conical thread of the main nut. According to the present invention the outer thread of the main nut and the thread of the lock nut are cylindrical and have a larger flank angle than the inner thread of the main nut and the head portion of the main nut forms a stop for the lock nut. This is a necessary combination. If a certain locking moment is utilized in the structures of US—A—2 575 641 as well as of the present invention, the locking force against the bolt will be substantially larger in the present invention.

The US—A—2 742 938 discloses a locking nut with main nut (sleeve) which has an inner thread to fit a bolt, and on parts of its outer periphery has a cylindrical thread which is axially slotted through on which a lock nut (shell) is screwed and tightened home against the main nut. Further, the profile of the outer cylindrical thread is chosen so as to exert a clamping force against the bolt by the torque action of the lock nut. Thus, said latter publication describes a solution wherein a nut for the tightening force in the bolt is connected to a lock member such that the clamping force is determined by the tightening force. Tightening force and clamping force can not be controlled independent of each other.

In the present invention however, the main nut may first be affected by the torque providing the desired stretching force in the bolt. Thereafter, entirely independent of the tightening force, the lock nut may be affected by the desired clamping force. The essential difference between US—A—2 742 938 and the present invention is that in the latter, the tightening force and the clamping force can be determined independently.

Reference is also made to the GB—A—162 115, disclosing a locking nut with the same principle as in the US—A—2 575 641, however, the outer thread of the main nut is cylindrical, whereas the thread of the lock nut is conical.

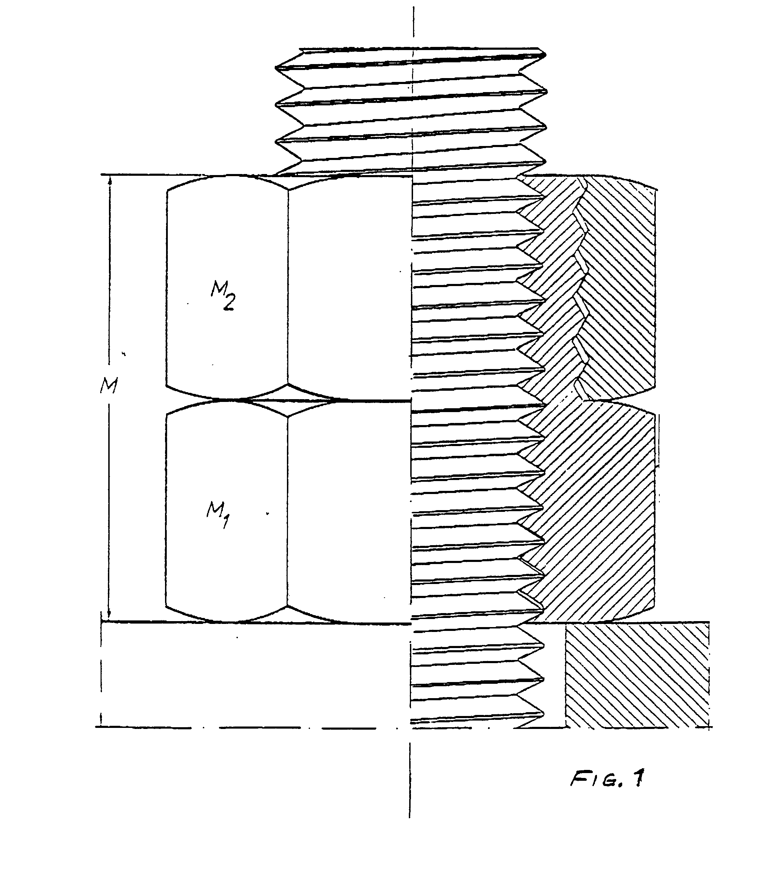

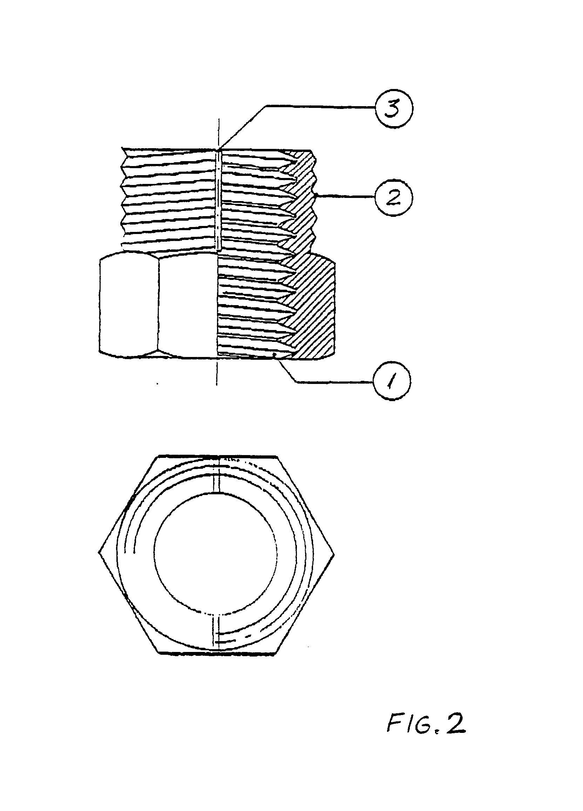

In the drawings, figure 1 shows a locking nut with cylindrical thread, in locked position, while figure 2 illustrates a main nut with through slots.

The locking nut M consists of a main nut $M_1$ and a lock nut $M_2$, where the lock nut is screwed on to the main nut $M_1$. See figure 1. The outer thread 2 on the main nut $M_1$ and the inner thread on the lock nut $M_2$ are made cylindrical, and when the lock nut $M_2$ is tightened home on to the main nut $M_1$ with the desired tightening force, the angle between the threaded surfaces will cause clamping against a bolt which is driven through the main nut $M_1$. The clamping force obtained between the main nut $M_1$ and the through bolt is independent on the tightening force.

In order to obtain a higher locking force with a lesser tightening force, the outer threaded portion of the main nut $M_1$ has at least one slot extending axially through the wall of the outer portion.

## Claim

Locking nut (M) consisting of a main nut ($M_1$) and a lock nut ($M_2$) with a hexagonal head, the main nut ($M_1$) having an inner thread (1) for engagement with a screw, an outer thread (2) on an outer portion for engagement with the lock nut ($M_2$) and a hexagonal head portion for tightening the main nut ($M_1$) on the screw, the threaded outer portion of the main nut ($M_1$) having at least one slot extending axially through the wall of said outer portion, characterized in that the outer thread (2) of the main nut ($M_1$) and the thread of the lock nut ($M_2$) are cylindrical and have a larger flank angle than the inner thread (1) of the main nut ($M_1$) and in that the head portion of the main nut ($M_1$) forms a stop for the lock nut ($M_2$).

## Patentanspruch

Blockierungsmutter (M), bestehend aus einer Hauptmutter ($M_1$) und einer Gegenmutter ($M_2$) mit Sechskantkopf, wobei die Hauptmutter ($M_1$) ein Innengewinde (1) zur Zusammenwirkung mit einer Schraube, ein Aussengewinde (2) an einem Aussenteil zur Zusammenwirkung mit der Gegenmutter ($M_2$) und einen Sechskantkopfteil zur Festziehung der Hauptmutter ($M_1$) an der Schraube aufweist, und wobei der mit Gewinde versehene Aussenteil der Hauptmutter ($M_1$) zumindest einen durch die Wand des genannten Aussenteils axial sich erstreckenden Schlitz hat, dadurch gekennzeichnet, dass das Aussengewinde (2) der Hauptmutter ($M_1$) und das Gewinde der Gegenmutter ($M_2$) zylindrisch sind und einen grösseren Flankenwinkel haben als das Innengewinde (1) der Hauptmutter ($M_1$), und dass der Kopfteil der Hauptmutter ($M_1$) einen Anschlag für die Gegenmutter ($M_2$) bildet.

## Revendication

Ecrou de blocage (M) comprenant un écrou principal ($M_1$) ainsi qu'un contre-écrou ($M_1$) à tête hexagonale, ledit écrou principal ($M_1$) étant muni

d'un filet intérieur (1) en prise avec une vis, d'un filet extérieur (2) arrangé sur une partie extérieure et en prise avec le contre-écrou (M₂) et d'une partie de tête hexagonale destinée à serrer l'écrou principal (M₁) sur la vis, la partie extérieure filetée de l'écrou principal (M₁) présentant au moins une fente s'étendant axialement à travers la paroi de ladite partie extérieure, caractérisé en ce que le filet extérieur (2) de l'écrou principal (M₁) et le filet du contre-écrou (M₂) sont cylindriques et ont un angle de pression plus large que le filet intérieur (1) de l'écrou principal (M₁), et en ce que la partie de tête de l'écrou principal (M₁) constitue une butée pour le contre-écrou (M₂).

$M_2$

$M_1$

$M$

FIG. 1

③

②

①

FIG.2